# EUROPÄISCHE PATENTSCHRIFT

(11) **EP 2 013 519 B1**
(45) Veröffentlichungstag und Bekanntmachung des Hinweises auf die Patenterteilung: **31.10.2012**
(21) Anmeldenummer: 07723845.9
(22) Anmeldetag: 30.03.2007
(51) Int. Cl.: F16J 15/00, F16J 15/54, F16J 15/40

(54) **DICHTANORDNUNG**
SEALING ARRANGEMENT
AGENCEMENT D'ETANCHEITE

(30) Priorität: 28.04.2006 AT 7342006
(43) Veröffentlichungstag der Anmeldung: 14.01.2009
(73) Patentinhaber: Andritz AG, 8045 Graz (AT)
(72) Erfinder: BACHHOFNER, Thomas, A-2353 Guntramsdorf (AT); HÖRNER, Stephane, A-3452 Atzenbrugg (AT)
(74) Vertreter: Schweinzer, Friedrich
(86) Internationale Anmeldenummer: PCT/EP2007/002904
(87) Internationale Veröffentlichungsnummer: WO 2007/124830

(56) Entgegenhaltungen:
- EP-A- 0 480 694
- EP-A1- 0 928 876
- DE-A1- 2 021 775
- DE-A1- 19 902 518
- DE-A1- 19 904 761
- US-A1- 2003 015 840
- US-B1- 6 293 558

## Beschreibung

Die Erfindung betrifft ein Verfahren zum Abdichten von rotierenden Wellen sowie eine eine Verwendung einer Dichtanordnung für die abgedichtete Hindurchführung von rotierenden Wellen durch Gehäusebohrungen von Gehäusen, umfassend zumindest eine Lippendichtung mit einer Dichtlippe, die einem Bereich mit im bestimmungsgemäβem Betrieb höherem Druck zugewandt its.

Für viele Anwendungen, bei welchen drehende Wellen abgedichtet in oder aus Gehäusen geführt werden, kommen Lippendichtungen zum Einsatz, beispielsweise bei Propeller-Antriebswellen von Bootsmotoren, wie in der EP 335 368 A1 geoffenbart. Hier, wie auch beim Dichtring gemäß der EP 1 055 849 A2, ist die Dichtlippe dem Bereich mit normalerweise niedrigerem Druck zugewandt. In letzterem Fall werden Vorkehrungen getroffen, an beiden Seiten der Dichtlippe gleichen Druck zu erhalten, der jedoch nicht konstant gehalten werden kann. Auch Lippendichtung sind bekannt, beispielsweise aus der DE 40 39 666 A1, welche überhaupt druckentlastet sind.

Weiters beschreibt die EP 0 480 694 A1 eine Abdichtung von Wellen zwischen Räumen unterschiedlichen Druckes, beispielsweise bei Pumpen oder Turbinen, wobei eine Vermischung der beidseitigen Fluids vermieden werden soll. Dies wird dadurch erreicht, dass in die Dichtung ein Fluid mit einem höheren Druck eingespeist wird, das auf beide Seiten der Dichtung austritt. Derartige Vorrichtungen sind jedoch nicht anwendbar, wenn eine absolute Dichtung zumindest in eine Richtung, beispielsweise gegen die Atmosphäre, erfolgen soll. Die DE 199 02 518 beschreibt eine Abdichtung des Schmierölkreislaufes eines Wälzlagers einer hydraulischen Maschine. Es liegt hier eine spezielle Trennwand vor, die sich in geringem Abstand von der Dichtlippe befindet wodurch kein geregelter Druckaufbau in einem speziellen Bereich ermöglicht wird.

Auch in der Papierindustrie kommen bei kleinen Refinern die sehr einfachen und billigen Lippendichtungen zur Abdichtung der Wellen zum Einsatz, wobei jedoch die Dichtlippe üblicherweise dem Bereich mit höherem Druck zugewandt ist, um ein Austreten des Mediums aus dem Refiner zu verhindern. Innerhalb dieser Vorrichtungen zum Zerreißen der Holzschnitzel im Zuge der Herstellung des Papierbreis, kommt es aber zu mehr oder weniger großen Druckschwankungen. Da Lippendichtungen aber empfindlich gegenüber höheren Druckschwankungen sind und leicht undicht werden, liegt ihr Einsatzbereich nur bei niedrigen Drücken als auch Druckschwankungen. Im Fall der Refiner wird dies ein Druckverhältnis zwischen Innen- und Außendruck von ca. 1,2 bis 1,5 : 1 sein.

Eine weitere Anwendung, die jedoch zumindest zwei hintereinander geschaltete Lippendichtungen aufweisen muss, ist in der DE 10 2005 019 654 A1 beschrieben. Hier wird ein Druckbeaufschlagungsmittel in den Raum zwischen den Lippendichtungen eingepresst, wobei aber keinerlei Hinweise betreffend der Nachführung oder Konstantheit dieses Druckes zu finden sind, was auch durch die alleinige Ausrichtung dieses Standes der Technik auf Dichtheitsprobleme aufgrund von Verschmutzungen an den Lippendichtungen begründet ist. Die dem Gehäuseinneren nächstliegende Lippendichtung hingegen wird - nur als zusätzliche Maßnahme vorgesehen - mit sehr großen Mengen an Druckbeaufschlagungsmittel gespült, die kaum gedrosselt in das Gehäuseinnere abströmen, um Verschmutzungen aus dem Bereich vor der Lippendichtungs-Anordnung zu entfernen.

Bei großen Refinern mit höheren Drücken bzw. allgemein bei Auftreten von höheren Druckschwankungen kommen Gleitringdichtungen zum Einsatz. Gleitringdichtungen sind sehr teuer und durch die Hart-Hart-Paarung auch spröde und können bei hohen Druckspitzen brechen, die Anlage muss dann sofort stillgelegt werden. Als weitere Methode zur Abdichtung seien auch noch die schon lange bekannten Stopfbüchsen erwähnt. Sie weisen den Nachteil auf, dass sie immer eine Leckage haben, schwierig zu justieren sind, damit ein guter Kompromiss aus Dichtheit, Leckage - welche jedoch zur Schmierung und Kühlung der Dichtungen notwendig ist - und nicht zu großem Widerstand für die Drehung der Welle erreicht ist.

Die Aufgabe der vorliegenden Erfindung war es daher, den Einsatzbereich von Dichtanordnungen mit Lippendichtungen wesentlich zu erweitern und damit auch bei höheren Drücken und Druckschwankungen über die Dichtanordnung deren Vorteile der höheren Wirtschaftlichkeit, besseren Haltbarkeit auch bei Druckspitzen und des einfacheren Einbaus und der einfacheren Wartung zu erzielen.

Diese Aufgabe wird gelöst durch das Verfahren nach Anspruch 1 sowie durch die Werwendung einer Dichtanordnung nach Anspruch 4. Die eingangs beschriebene Dichtanordnung ist erfindungsgemäß dadurch gekennzeichnet, dass im Gehäuse zumindest ein umlaufender, nutartiger Bereich vorgesehen ist, wobei zwischen Gehäuse und Welle zwischen dem Bereich und dem auf der der Lippendichtung abgewandten Seite des Bereichs angeordneten Gehäuseinneren ein die Abströmung drosselnder Spalt vorgesehen ist und wobei die oder jede Lippendichtung in einer der rotierenden Welle zugewandten nutartigen Ausnehmung innerhalb der Gehäusebohrung eingesetzt ist, und dass jeweils zumindest eine mit einer Druckquelle verbindbare Passage zum Innenraum der dem Bereich zugewandten Seite einer oder einiger der Lippendichtungen führt. Damit ist auf jeden Fall über die Dichtanordnung ein konstanter Differentialdruck gegeben, so dass zu Undichtigkeit führende Druckschwankungen nicht auf die Lippendichtung einwirken können und diese somit immer ihre Dichtheit beibehält.

Gemäß einer vorteilhaften Ausführungsform kann zur Erweiterung des abdichtbaren Druckbereiches mittels einer Anordnung vorgesehen sein, dass zumindest zwei Lippendichtungen in Serie angeordnet sind, die mehrere umlaufende, nutartige Bereiche bilden. Werden zumindest zwei Lippendichtungen in Serie ange-ordnet, so ist jede der Lippendichtungen auf der dem Bereich mit normalerweise höherem Druck zugewandten Seite mit einem konstanten Druck beaufschlagt, der einen vorgebbaren Maximalwert nicht übersteigt, wobei der Maximalwert an der innersten Lippendichtung höher ist als der höchste innerhalb des Gehäuses auftretende Druck und die Druckdifferenz der Maximaldrücke an jeder Lippendichtung einen vorgebbaren Wert nicht überschreitet. An jeder Lippendichtung der Anordnung liegt daher immer eine konstante Druckdifferenz an, wobei durch die kaskadierte Anordnung auch der Maximaldruck jeder der Lippendichtungen nicht überschritten wird. Eine Lippendichtung kann eine konstante Druckdifferenz bis ca. 2 bar aushalten, so dass durch Hintereinanderschaltung mehrerer Stufen auch Druckdifferenzen oberhalb von 2 bar abgedichtet werden können. Damit können Wellen mit sehr großem Durchmesser (ca. 2 m) und auch mit hohen Drehzahlen (ca. 1500/min) abgedichtet werden, mit Relativgeschwindigkeiten von etwa 15 bis 25 m/s zwischen Welle und Dichtung.

Damit der Druckaufbau über das zugeführte Medium auch unabhängig von einer speziellen Gestaltung des Einbauraumes der Dichtanordnung möglich ist, beispielsweise wenn Stopfbüchsen oder Gleitringdichtungen durch die beschriebene Anordnung ersetzt werden sollen, kann gemäß einem weiteren vorteilhaften Ausführungsbeispiel der Erfindung auch vorgesehen sein, dass auf der dem Bereich zugewandten Seite zumindest der dem Bereich nächstliegenden Lippendichtung ein Drosselring in die Ausnehmung innerhalb der Gehäusebohrung eingesetzt ist. In diesem Fall sorgt also der Drosselring für die gedrosselte Abströmung des Mediums aus dem Bereich zwischen Lippendichtung und Bereich mit höherem Druck und damit für den Druckaufbau und die Druckbeaufschlagung der Uppendichtung. Der Drosselring kann unabhängig von der Lippendichtung ausgeführt sein, kann sehr weich sein, und kann auch vom Material an chemische Verhältnisse im Innenraum angepasst werden.

Gemäß einer ersten Ausführungsform ist diese Konstruktionsart dadurch gekennzeichnet, dass zumindest eine mit der Druckquelle verbindbare Passage zum Bereich zwischen diesem Drosselring und der Lippendichtung führt.

Gemäß einer weiteren Ausführungsform kann auch vorgesehen sein, dass der Drosselring mit zumindest einer vorzugsweise radialen Bohrung versehen ist, und die mit der Druckquelle verbindbare Passage durch diese zumindest eine radiale Bohrung im Drosselring mit dem Bereich zwischen Drosselring und Lippendichtung verbunden ist.

Wenn gemäß einer weiteren Ausführungsform vom Zwischenraum zwischen zwei vom Bereich entfernt liegenden Lippendichtungen eine Passage nach außen führt, über welche Passage aus dem Bereich austretendes Medium abgeführt wird, kann allenfalls austretendes Medium oder auch Prozeßfluid geordnet abgeführt werden.

Vorteilhafterweise kann bei einer derartigen Konstruktion auch die Dichtheit der Dichtanordnung überprüft und überwacht werden, wenn die Passage zur Abfuhr von austretendem Medium mit einer Sensorvorrichtung für dieses Medium versehen oder damit verbunden ist.

Die Lösung der eingangs gestellten Aufgabe setzt für das Gehäuse erfindungsgemäß voraus, dass zumindest eine mit einer Druckquelle verbindbare Passage zum dem Bereich mit normalerweise höherem Druck näherliegenden Bereich der oder jeder Aufnahme führt. Damit kann vor die einzusetzende Lippendichtung ein Medium zur Druckbeaufschlagung dieser Dichtungsanordnung mit einem auf konstant eingeregelten Druck zugeführt werden, um die optimale und konstante Dichtheit der Anordnung zu gewährleisten.

Die Abfuhr von dennoch über die Lippendichtung austretendem Medium bzw.

Prozeßfluid kann gesichert durchgeführt werden, wenn von einem dem Bereich mit normalerweise höherem Druck entfernt liegenden Abschnitt der Aufnahme eine weitere Passage zur Abfuhr von aus dem Bereich mit normalerweise höherem Druck austretendem Medium ausgeht.

Vorteilhafterweise ist in der weiteren Passage zur Abfuhr von austretendem Medium eine Sensorvorrichtung für dieses Medium vorgesehen.

In der nachfolgenden Beschreibung soll die Erfindung anhand der in den beigefügten Zeichnungen dargestellten Ausführungsbeispiele näher erläutert werden.

Dabei zeigt die Fig. 1 eine Dichtanordnung mit einer einzelnen Lippendichtung im Schnitt, Fig. 2 ist ein Schnitt durch eine Dichtanordnung mit zwei Lippendichtungen und einem Drosselring, und Fig. 3 zeigt ein weiteres erfindungsgemäßes Ausführungsbeispiels im Schnitt, mit vier hintereinandergeschalteten Lippendichtungen.

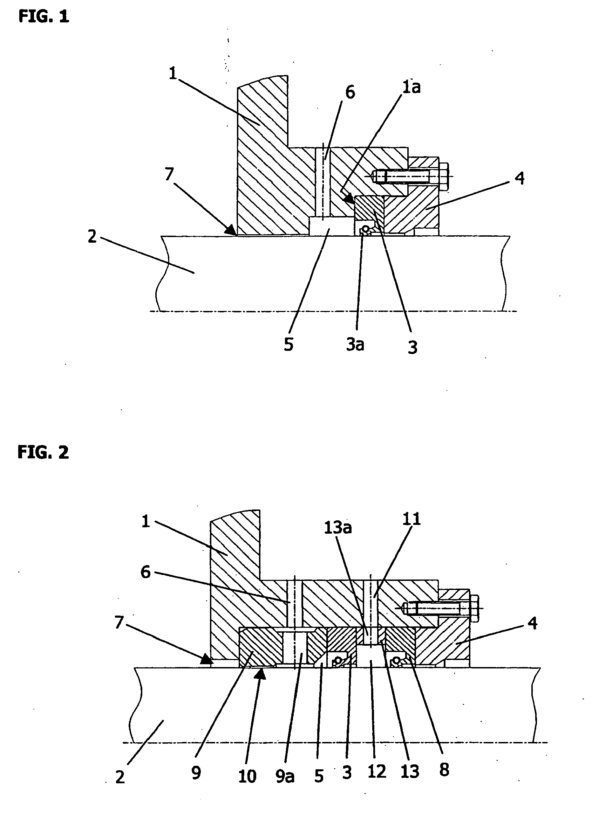

In Fig. 1 ist ein Schnitt durch ein Gehäuse 1 mit einer Dichtanordnung dargestellt, welche Dichtanordnung für die abgedichtete Hindurchführung der rotierenden Welle 2 durch eine Öffnung des Gehäuses 1 vorgesehen ist. Die Dichtanordnung umfasst im dargestellten einfachsten Beispiel eine einzelne Lippendichtung 3 mit einer Dichtlippe 3a, die dem Bereich mit normalerweise höherem Druck zugewandt ist.

Die Lippendichtung 3 sitzt auf einer Auskragung 1a der Öffnung des Gehäuses 1 auf und wird durch einen Anpressring 4 gegen diese Auskragung 1a gepresst. Zwischen der Auskragung 1a und einem die Welle 2 mit geringen Abstand umgebenden Abschnitt der Auskragung 1a und einem die Welle 2 mit geringem Abstand umgebenden Abschnitt der Öffnung des Gehäuses 1 ist ein umlaufender, nutartiger Bereich 5 gebildet. Zu diesem Bereich 5, der sich auf der Seite der Lippendichtung 3 befindet, der dem normalerweise höheren Druck zugewandt ist, führt eine Bohrung 6 im Gehäuse 1, so dass der Bereich 5 mit einer Druckquelle verbunden werden kann. Dieses Medium zur Druckbeaufschlagung wird vorzugsweise ein bereits im Prozess verwendetes bzw. das auf der Seite mit normalerweise höherem Druck vorhandene Medium sein.

Das über die Bohrung 6 zugeführt Medium strömt über den Spalt 7 zwischen Gehäuse 1 und Welle 2 stark gedrosselt hindurch, so dass sich im Bereich 5 ein gegenüber dem normalerweise auf dieser Seite der Lippendichtung 3 vorherrschenden Druck ein erhöhter Druck aufbauen kann. Dieser erhöhte Druck wird über externe Einrichtungen auf einen konstanten Wert eingestellt, welcher Wert in jedem Fall höher ist als der höchste innerhalb des Gehäuses auftretende Druck. Da auf der dem Bereich 5 gegenüberliegenden Seite der Lippendichtung 3 konstanter Druck herrscht, üblicherweise der Umgebungsdruck, liegt an der Lippendichtung 3 eine konstante Druckdifferenz an, so dass sie ihre optimale Dichtwirkung zeitlich konstant beibehält. Überdies wird durch das von der Lippendichtung 3 und durch den Spalt 7 strömende Medium die Lippendichtung 3 sauber gehalten und werden allfällige in den Spalt 7 gelangte Verunreinigungen ausgespült.

In Fig. 2 ist eine weitere Ausführungsform der Erfindung dargestellt die für höhere Druckdifferenzen zwischen den beiden Seiten der Dichtanordnung vorteilhaft ist. Gleich Bauteile wie in Fig. 1 sind auch mit den gleichen Bezugszeichen bezeichnet. Dabei sind zwei Lippendichtungen 3 und 8 hintereinandergeschaltet.

Zwischen einer Auskragung auf der Seite des Gehäuses 1 auf der Seite mit normalerweise höherem Druck und der ersten Uppendichtung 3 ist bei dieser Ausführungsform beispielhaft ein Drosselring 9 eingesetzt. Zwischen der dem Bereich mit normalerweise höherem Druck zugewandten Seite des Drosselrings 9 und der Welle 2 ist nun ein sehr schmaler Spalt 10 vorgesehen, durch welchen Spalt 10 das über die Bohrung 6 im Gehäuse 1 und zumindest eine vorzugsweise radiale Bohrung 9a im Drosselring 9 Medium von einer Druckquelle zugeführt werden kann. Dieses Medium strömt, funktional gleichartig wie oben beschrieben, gedrosselt über den Spalt 10 ab, so dass sich vor der Lippendichtung 3 ein auf einen konstanten Wert eingeregelter Druck einstellt, der höher ist als der Druck auf der der Lippendichtung 3 gegenüberliegenden Seite des Drosselrings 9.

Über eine weitere Bohrung 11 im Gehäuse 1 kann das gleiche Medium, allenfalls auch ein anderes Medium, in den Bereich 12 zwischen den beiden Lippendichtungen 3 und 8 eingebracht und ebenfalls über externe Einrichtungen auf einen konstanten Wert eingeregelt werden, der aber geringer ist als der Wert des über die Bohrung 6 angelegten Drucks. Dabei ist zwischen den beiden Lippendichtungen 3 und 8 ein Abstandhalterring 13 eingesetzt, der zumindest eine ebenfalls vorzugsweise radiale Bohrung 13a aufweist, durch welchen das Medium in den Bereich 12 gelangt. Der über die Bohrungen 6 und 11 ange-legte Druck ist derart aufeinander abgestimmt, dass die Druckdifferenz an jeder Lippendichtung einen vorgebbaren Maximalwert nicht überschreitet, welcher Maximalwert typischerweise bei ca. 2 bar liegt. Somit kann auch für sehr hohe insgesamt herrschende Druckdifferenzen durch Hintereinanderschaltung mehrerer Lippendichtungen die für jede Lippendichtung geltende maximale Druckdifferenz eingehalten werden, um derart die optimale Dichtheit über den längstmöglichen Zeitraum zu gewährleisten.

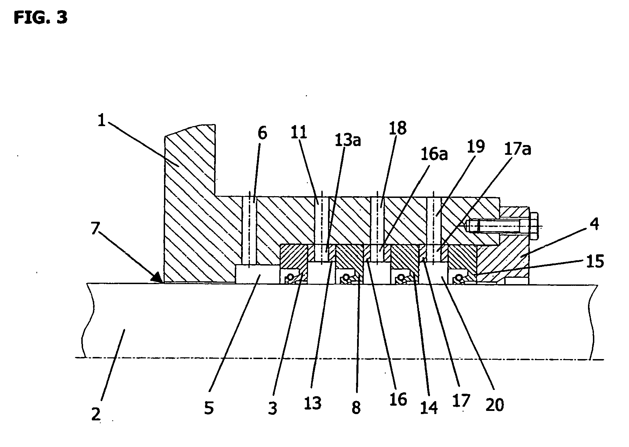

Eine nochmals erweiterte Ausführungsform einer erfindungsgemäßen Dichtanordnung zeigt die Fig. 3. Hier sind nunmehr vier Lippendichtungen 3, 8, 14 und 15 vorgesehen, von welchen die dem Bereich mit normalerweise höherem Druck nächstliegende Lippendichtung 3 an einer Auskragung des Gehäuses 1 anliegt und die übrigen Dichtungen 8, 14 und 15, getrennt jeweils durch Abstandhalterringe 13, 16 und 17 daran angepresst werden. Jeder der Abstandhalterringe 13, 16 und 17 weist zumindest eine vorzugsweise radiale Bohrung 13a, 16a und 17a auf. Damit kann über die Bohrungen 6, 11 und 18 im Gehäuse 1 Medium von einer Druckquelle in den Bereich zwischen den Lippendichtungen 3 und 8 bzw. 8 und 14 eingebracht und können diese Bereiche derart mit einem auf konstant eingeregelten Druck beaufschlagt werden.

Die dem Bereich mit normalerweise höherem Druck entfernteste Bohrung 19 hingegen dient beispielhaft nicht einer weiteren Druckbeaufschlagung, sondern der Abfuhr von Medium oder einem anderen Fluid, das aus dem Bereich mit normalerweise höheren Druck über die Lippendichtungen 3, 8 und 14 bis in den Bereich 20 vor der äuBersten Lippendichtung 15 gelangt ist. Wenn in der Bohrung 19 selbst oder im Anschluss an diese Bohrung 19 eine Sensoreinrichtung (nicht dargestellt) für das Medium und/oder ein anderes Prozeßfluid vorgesehen ist, kann somit eine Undichtheit der Dichtanordnung festgestellt werden.

Zusätzlich oder alternativ zum Medium für die Druckbeaufschlagung der Lippendichtungen kann zwischen jeweils zwei Dichtungen auch Fett oder ein anderes Schmiermittel eingebracht werden, um die Lippendichtungen geschmeidig zu erhalten.

## Patentansprüche

1. Verfahren zum Abdichten von rotierenden Wellen (2) in Gehäusebohrungen von Gehäusen (1) bei Refinern, umfassend zumindest eine Lippendichtung (3, 8, 14, 15) mit einer Dichtlippe, die dem Bereich mit im bestimmungsgemäBern Betrieb höherem Druck zugewandt ist, **dadurch gekennzeichnet, dass** die Lippendichtung (3, 8, 14, 15) auf der dem Bereich mit dem höheren Druck zugewandten Seite (5) mit einem konstanten Druck beaufschlagt wird, der höher ist als der höchste innerhalb des Gehäuses (1) auftretende Druck, wobei zwischen dem Bereich mit dem höheren Druck und dem Gehäuseinneren die Abströmung durch einen Spalt (7, 10) gedrosselt wird.

2. Verfahren nach Anspruch 1, wobei zumindest zwei Lippendicfitungen (3, 8, 14) in Serie angeordnet sind, **dadurch gekennzeichnet, dass** jede der Lippendichtungen (3, 8, 14) auf der dem Bereich mit normalerweise höherem Druck zugewandten Seite mit einem konstanten Druck beaufschlagt wird, der einen vorgebbaren Maximalwert nicht übersteigt, wobei
der Maximalwert an der innersten Lippendichtung (3) höher ist als der höchste innerhalb des Gehäuses (1) auftretende Druck und die Druckdifferenz der Maximafdrücke an jeder Lippendichtung (3, 8, 14) einen vorgebbaren Wert nicht überschreitet.

3. Verfahren nach einem der Ansprüche 1 oder 2, **dadurch gekennzeichnet, dass** die Bereiche mit normalerweise höherem Druck mit einem auf konstant eingeregelten Druck beaufschlagt werden.

4. Verwendung einer Dichtanordnung für die abgedichtete Hindurchführung von rotierenden Wellen (2) durch Gehäusebohrungen von Gehäusen (1) bei Refinern, umfassend zumindest eine Lippendichtung (3, 8, 14, 15) mit einer Dichtlippe (3a), die dem Bereich mit im bestimmungsgemäßem Betrieb höherem Druck zugewandt ist, **dadurch gekennzeichnet, dass** die Lippendichtung (3, 8, 14, 15) auf der dem Bereich mit dem höheren Druck zugewandten Seite (5) über eine Passage (6 und 9a) mit einer Druckquelle verbunden ist, wobei die Lippendichtung (3, 8, 14, 15) auf der dem Bereich mit dem höheren Druck zugewandten Seite (5) mit einem konstanten Druck beaufschlagt wird, der höher ist als der höchste innerhalb des Gehäuses (1) auftretende Druck und zwischen dem Bereich mit dem höheren Druck und dem Gehäuseinneren die Abströmung durch einen Spalt (7, 10) gedrosselt wird.

5. Verwendung nach Anspruch 4, **dadurch gekennzeichnet, dass** auf der dem Bereich mit normalerweise höherem Druck zugewandten Seite zumindest der dem Bereich mit normalerweise höherem Druck nächstliegenden Lippendichtung (3) ein Drosselring (9) in eine nutartige Ausnehmung innerhalb der Gehäusebohrung eingesetzt ist.

## Claims

1. Process for sealing rotating shafts (2) in housing bore holes of refiner housings (1), comprising at least one lip seal (3, 8, 14, 15) with a sealing lip that faces the area at higher pressure during operation as specified, **characterised by** the sealing lip (3, 8, 14, 15) on the side (5) facing the area at higher pressure being pressurised at a constant pressure that is higher than the highest pressure occurring inside the housing (1), where the outflow is throttled by a gap (7, 10) between the area at the higher pressure and the inside of the housing.

2. Process according to Claim 1, where at least two lip seals (3, 8, 14) are arranged in series, **characterised by** each of the lip seals (3, 8, 14) being pressurised at a constant pressure, which does not exceed a maximum that can be pre-set, on the side facing the area that is normally at a higher pressure, where the maximum at the innermost lip seal (3) is higher than the highest pressure occurring inside the housing (1) and the pressure difference between the maximum pressures at each lip seal (3, 8, 14) does not exceed a value that can be pre-set.

3. Process according to one of Claims 1 or 2, **characterised by** the areas normally at a higher pressure being pressurised at a pressure tuned to a constant level.

4. Use of a sealing arrangement for the sealed leadthrough of rotating shafts (2) through housing bore holes of refiner housings (1), comprising at least one lip seal (3, 8, 14, 15) with a sealing lip (3a) facing the area with higher pressure during operation as specified, **characterised by** the lip seal (3, 8, 14, 15) on the side (5) facing the area with the higher pressure being connected via a passage (6 and 9a) to a pressure source, where the lip seal (3, 8, 14, 15) on the side (5) facing the area with the higher pressure is pressurised at a constant pressure that is higher than the highest pressure occurring inside the housing (1) and the outflow is throttled by a gap (7, 10) between the area with the higher pressure and the inside of the housing.

5. Use according to Claim 4, **characterised by** a throttle ring (9) being placed in a groove-like recess inside the housing bore hole at least on the side of the lip seal (3) nearest to the area normally at a higher pressure and which faces the area that is normally at a higher pressure.

## Revendications

1. Procédé pour étanchéifier des arbres rotatifs (2) tournant dans des alésages de boîtier (1) d'un raffineur, comprenant au moins un joint à lèvre (3, 8, 14, 15) avec une lèvre d'étanchéité faisant face à la zone de pression plus élevée en fonctionnement conformément au but, **caractérisé en ce que** le côté (5) du joint à lèvre (3, 8, 14, 15) faisant face à la zone de pression plus élevée est soumise à une pression constante qui est supérieure à la pression maximale appliquée dans le boîtier (1), l'écoulement étant restreint par une fente (7, 10) située entre la zone à pression plus élevée et l'intérieur du boîtier.

2. Procédé selon la revendication 1, avec au moins deux joints à lèvre (3, 8, 14) disposés en série, **caractérisé en ce qu'**au côté du joint faisant face à la zone normalement soumise à une pression plus élevée, chaque joint à lèvre (3, 8, 14) est soumise à une pression constante ne dépassant pas un maximum définissable, la pression maximale au niveau du joint à lèvre (3) situé au plus proche de la fente (7, 10) étant supérieure à la pression maximale appliquée dans le boîtier (1) et l'écart entre les pressions maximales au niveau de chaque joint à lèvre (3, 8, 14) ne dépassant pas une valeur définissable.

3. Procédé selon l'une des revendications 1 ou 2, **caractérisé en ce que** les zones normalement soumises à une pression plus élevée sont soumises à une pression à niveau constant.

4. Emploi d'une disposition pour étanchéifier la traversée d'arbres rotatifs (2) tournant dans des alésages de boîtier (1) d'un raffineur, comprenant au moins un joint à lèvre (3, 8, 14, 15) avec une lèvre d'étanchéité (3a) faisant face à la zone de pression plus élevée en fonctionnement conformément au but, **caractérisé en ce que** le côté (5) du joint à lèvre (3, 8, 14, 15) faisant face à la zone de pression plus élevée, est lié à une source de pression par un passage (6 et 9a), le joint à lèvre (3, 8, 14, 15) au côté (5) faisant face à la zone de pression plus élevée étant soumise à une pression constante qui est supérieure à la pression maximale appliquée dans le boîtier (1) et l'écoulement étant restreint par une fente (7, 10) entre la zone à pression plus élevée et l'intérieur du boîtier.

5. Emploi selon la revendication 4, **caractérisé en ce qu'**au côté faisant face à la zone normalement soumise à une pression plus élevée, un anneau d'étranglement (9) est disposé dans une découpe en forme de rainure pratiquée dans l'alésage du boîtier au moins au côté du joint à lèvre (3) situé au plus proche de la zone normalement soumise à une pression plus élevée.
